# EUROPEAN PATENT APPLICATION

(11) **EP 2 833 453 A1**
(43) Date of publication of application: **04.02.2015**
(21) Application number: 13769093.9
(22) Date of filing: 28.03.2013
(51) Int. Cl.: H01M 8/02, H01M 8/10

(54) **RUBBER COMPOSITION AND SEALED FUEL CELL**

(30) Priority: 30.03.2012 JP 2012078688; 30.03.2012 JP 2012078689
(71) Applicant: Sumitomo Riko Company Limited, Komaki, Aichi (JP)
(72) Inventor: YAMAMOTO Kenji, Komaki-shi Aichi 485-8550 (JP); HAYASHI Hirokazu, Komaki-shi Aichi 485-8550 (JP); KITA Shinji, Komaki-shi Aichi 485-8550 (JP)
(74) Representative: Müller-Boré & Partner Patentanwälte PartG mbB
(86) International application number: PCT/JP2013/059253
(87) International publication number: WO 2013/147020

(57) **Abstract**

There is provided a rubber composition which does not foul molds, requires low production costs and is excellent in mass productivity, and has high adhesion reliability. The rubber composition according to the present invention is used in an adhesive layer 6 included in a fuel cell sealed body allowing a constituting member for a fuel cell 2, 3 or 5 and a rubber member for sealing 4a or 4b to be bonded together through the adhesive layer 6 or allowing the two rubber members 4a and 4a to be bonded together through the adhesive layer 6, and is any one of the following liquid rubber composition (α) and the following solvent-based rubber composition (β).
(α) a liquid rubber composition containing (B) and (C) together with the following (A1).
(β) a solvent-based rubber composition containing a solvent together with the following (A2), (B) and (C).
(A1) a rubber component containing at least liquid rubber.
(A2) at least one selected from the group consisting of EPM, EPDM, NBR and H-NBR.
(B) a crosslinking agent composed of an organic peroxide.
(C) at least one selected from the group consisting of resorcinol-based compounds, melamine-based compounds, aluminate-based coupling agents and silane coupling agents.

## Description

### Technical Field

The present invention relates to a rubber composition used in an adhesive layer included in a fuel cell sealed body prepared by allowing a constituting member for a fuel cell such as a metal separator and a rubber member for sealing the member to be bonded together through the adhesive layer, and a fuel cell sealed body prepared therewith.

### Background Art

Fuel cells that generate electricity by the electrochemical reaction of gas have a high power generation efficiency and have an extremely low environmental impact since the gas exhausted therefrom is clean. Of these, a solid polymer type fuel cell can be actuated at relatively low temperatures and has a high output density. On that account, various applications such as power sources for power generation and for a vehicle are expected.

With regard to the solid polymer type fuel cell, a cell in which a membrane electrode assembly (MEA) and the like are interposed between metal separators constitutes a power generating unit. The MEA is composed of a polymer membrane constituting an electrolyte (an electrolyte membrane) and a pair of electrode catalyst layers [a fuel electrode (anode) catalyst layer, an oxygen electrode (cathode) catalyst layer] which are arranged on both surfaces of the electrolyte membrane in the thickness direction thereof. Furthermore, on the surface of each of a pair of electrode catalyst layers, a porous layer (a gas diffusion layer) for diffusing gas is arranged. To the fuel electrode side and the oxygen electrode side, a fuel gas such as hydrogen and an oxidizer gas such as oxygen and air are supplied, respectively. Power generation is performed by the electrochemical reaction in a three-phase interface of the gas supplied, an electrolyte and an electrode catalyst layer. A solid polymer type fuel cell is configured by fastening a cell stack composed of a large number of the cells stacked with end plates arranged at both ends in the cell stacking direction, and the like.

The metal separator is provided with a passage for the gas supplied to each of the electrodes and a passage for a refrigerant for alleviating heat generated on power generation. Moreover, since the electrolyte membrane in a state of containing water has a proton conductivity, during the actuation, it is necessary to maintain the electrolyte membrane in a wet state. Thus, in order to maintain the inside of a cell in a wet state, as well as to prevent mixing of the gases and leakage of the gas and the refrigerant, it is important to secure the sealing property in the periphery of the MEA and the porous layer and between metal separators adjacent to each other. As a sealing member for sealing these constituting members, for example, there has been proposed an adhesive sealing member for a fuel cell in which the sealing property between the constituting members such as metal separators is secured, without applying glue (glue-less), by kneading an adhesive component such as a resorcinol-based compound into a rubber component such as ethylene-propylene-diene rubber (EPDM) to allow the sealing member itself to have an adhesivity (See PL 1).

### CITATION LIST

### Patent Literature

PL 1: JP 2011-249283 A

### SUMMARY OF THE INVENTION

With regard to sealing property, the adhesive sealing member for a fuel cell described in the Patent Literature 1 is highly excellent since a glue component kneaded into a rubber component and a metal separator are bonded together by hydrogen bonding. However, there is a problem that the adhesive component kneaded into a rubber component is also bonded to a general-purpose mold and the mold is fouled. As a measure to this problem, although the use of a mold allowing the surface thereof to be subjected to a TEFLON coating treatment is also conceivable, since the mold has poor durability and the fouling caused by the adhesive component proceeds gradually, it is necessary to clean the mold, the measure is hardly automated and requires high production costs, and there is room for improvement with regard to mass productivity.

The present invention has been made in view of these circumstances, and is aimed at providing a rubber composition which does not foul molds, requires low production costs and has excellent mass productivity, and has high adhesion reliability, and a fuel cell sealed body prepared therewith.

The present inventors have conducted diligent studies in view of obtaining a rubber composition for an adhesive layer disposed to a fuel cell sealed body which does not foul molds, requires low production costs and is excellent in mass productivity, and has high adhesion reliability. In the course of the studies, attention was paid to previously preparing a rubber member that contains no adhesive component (vulcanized rubber and the like), applying a liquid rubber composition or a solvent-based rubber composition to at least one of the rubber member and a constituting member for a fuel cell (metal separator and the like), and then allowing them to be bonded together, instead of allowing an adhesive component to be kneaded into a rubber member for sealing. As a result, a liquid rubber composition (α) containing a rubber component (A1) containing at least liquid rubber, a crosslinking agent (B) composed of an organic peroxide and an adhesive component (C) such as a resorcinol-based compound or a solvent-based rubber composition (β) containing a solvent together with a rubber component (A2) such as ethylene-propylene-diene rubber, a crosslinking agent (B) composed of an organic peroxide and an adhesive component (C) such as a resorcinol-based compound has been ascertained, the present inventors have found that, by using the composition to form an adhesive layer included in a fuel cell sealed body, the adhesion reliability between a constituting member for a fuel cell and a rubber member for sealing and the like can be enhanced and the expected purpose can be achieved. Thus, the inventors attained the present invention.

That is, a first aspect of the present invention is directed to a rubber composition which is used in an adhesive layer included in a fuel cell sealed body and is any one of the following liquid rubber composition (α) and the following solvent-based rubber composition (β). (α) a liquid rubber composition containing the following (A1) to (C).
(A1) a rubber component containing at least liquid rubber.
(B) a crosslinking agent composed of an organic peroxide.
(C) at least one adhesive component each selected from the group consisting of a resorcinol-based compound, a melamine-based compound, an aluminate-based coupling agent and a silane coupling agent.
   (β) a solvent-based rubber composition containing a solvent together with the following (A2) to (C).
(A2) at least one rubber component each selected from the group consisting of ethylene-propylene rubber, ethylene-propylene-diene rubber, acrylonitrile-butadiene rubber and hydrogenated acrylonitrile-butadiene rubber.
(B) a crosslinking agent composed of an organic peroxide.
(C) at least one adhesive component each selected from the group consisting of a resorcinol-based compound, a melamine-based compound, an aluminate-based coupling agent and a silane coupling agent.

Moreover, a second aspect of the present invention is directed to a fuel cell sealed body prepared by allowing a constituting member for a fuel cell and a rubber member for sealing to be bonded together through an adhesive layer or prepared by allowing the two rubber members to be bonded together through an adhesive layer, the adhesive layer being composed of a rubber composition according to the first gist of the present invention.

As stated above, the rubber composition according to the present invention is a rubber composition used in an adhesive layer included in a fuel cell sealed body and is a liquid rubber composition (α) containing a rubber component (A1) containing at least liquid rubber, a crosslinking agent (B) composed of an organic peroxide and an adhesive component (C) such as a resorcinol-based compound (hereinafter, sometimes referred to also as "liquid rubber composition (α)"). Moreover, the rubber composition is a solvent-based rubber composition (β) containing a solvent together with a rubber component (A2) such as ethylene-propylene-diene rubber, a crosslinking agent (B) composed of an organic peroxide and an adhesive component (C) such as a resorcinol-based compound (hereinafter, sometimes referred to also as "solvent-based rubber composition (β)").

In this connection, in the present invention, the rubber composition which is liquid (liquid rubber composition) (α) means a rubber composition which is liquid at ordinary temperature.

With regard to the liquid rubber composition (α) and the solvent-based rubber composition (β), since either of them contains an adhesive component (C), they have good adhesivity between a constituting member for a fuel cell and a rubber member for sealing or adhesivity between the two rubber members and have high adhesion reliability. For example, in the case of containing a resorcinol-based compound and a melamine-based compound as the adhesive component (C), the melamine-based compound serves as a methylene donor and the resorcinol-based compound serves as a methylene acceptor. At the time of crosslinking, by the provision of the methylene group, the resorcinol-based compound is crosslinked with the double bond in a rubber member (vulcanized rubber and the like) and is chemically bonded thereto, and also makes a hydrogen bond with the hydroxyl group in a constituting member for a fuel cell (metal separator and the like). This allows the rubber member (vulcanized rubber and the like) and the constituting member for a fuel cell (metal separator and the like) to be bonded together through an adhesive layer. Moreover, in the case of containing an aluminate-based coupling agent as the adhesive component (C), a constituting member for a fuel cell and a rubber member for sealing are bonded together through the aluminate-based coupling agent in an adhesive layer. Similarly, in the case of containing a silane coupling agent as the adhesive component (C), a constituting member for a fuel cell and a rubber member for sealing are bonded together through the silane coupling agent in an adhesive layer. Furthermore, in the case where the constituting member for a fuel cell is a non-metal material other than a metal separator and the like, for example, in the case of a membrane electrode assembly (MEA), a gas diffusion layer or the like, it is considered that, by virtue of the compatibility or thermal fusion force between the adhesive component (C) in an adhesive layer and the constituting member for a fuel cell, the two are bonded together.

The adhesive force which these adhesive components (C) have is large. In addition, even under an actuation environment of a fuel cell, the adhesive force is hardly reduced. Thus, according to the fuel cell sealed body of the present invention, even in the case where a fuel cell is actuated for a long time, improved sealing property is secured. That is, the actuation reliability of a fuel cell can be enhanced.

The fuel cell sealed body according to the present invention has a rubber elasticity within a wide temperature range from an actuation temperature of a fuel cell to about -30°C. As such, according to the fuel cell sealed body of the present invention, it becomes possible to attain sealing by stress as well as sealing by adhesion. When the rubber elasticity is lost at an extremely low temperature, the sealing property in sealing attributed to stress rather than sealing attributed to adhesion is liable to be lowered. In this point, according to the fuel cell sealed body of the present invention, since the rubber elasticity is maintained even at an extremely low temperature, the sealing property is hardly lowered even in sealing attributed to stress.

In this way, with regard to the fuel cell sealed body according to the present invention, since a constituting member for a fuel cell and a rubber member for sealing or the two rubber members are bonded together through an adhesive layer composed of any one of the liquid rubber composition (α) containing the foregoing (A1) to (C) and the solvent-based rubber composition (β) containing the foregoing (A2) to (C), the adhesion reliability is high. Thus, since it is not necessary to knead an adhesive component into the rubber member for sealing, the rubber member does not foul molds. Accordingly, since it is not necessary to clean molds, the fuel cell sealed body requires low production costs owing to automation and is excellent in mass productivity. Moreover, in the present invention, since the viscosity of the rubber composition can be lowered by using liquid rubber or by using a solvent, the adhesive layer can be easily formed by dispenser coating or the like, resulting in excellent working efficiency. Furthermore, since an organic solvent such as toluene is not used in the liquid rubber composition (α), the emission of volatile organic compounds (VOC) can be reduced and the problem of environmental pollution can also be eliminated.

With regard to ethylene-propylene rubber (EPM) or ethylene-propylene-diene rubber (EPDM) in (A1) or (A2) which is the above-mentioned specific rubber, the smaller the ethylene content is, the more difficult to crystallize at an extremely low temperature of about -20 to -30°C the rubber is. In short, with regard to EPM or EPDM with a small ethylene content, since the rubber elasticity is hardly reduced even at an extremely low temperature, the rubber elasticity can be maintained even at an extremely low temperature. Accordingly, when ethylene-propylene rubber or ethylene-propylene-diene rubber having an ethylene content of 60% by weight or less is used, the sealing property at an extremely low temperature is further enhanced.

### BRIEF DESCRIPTION OF THE DRAWINGS

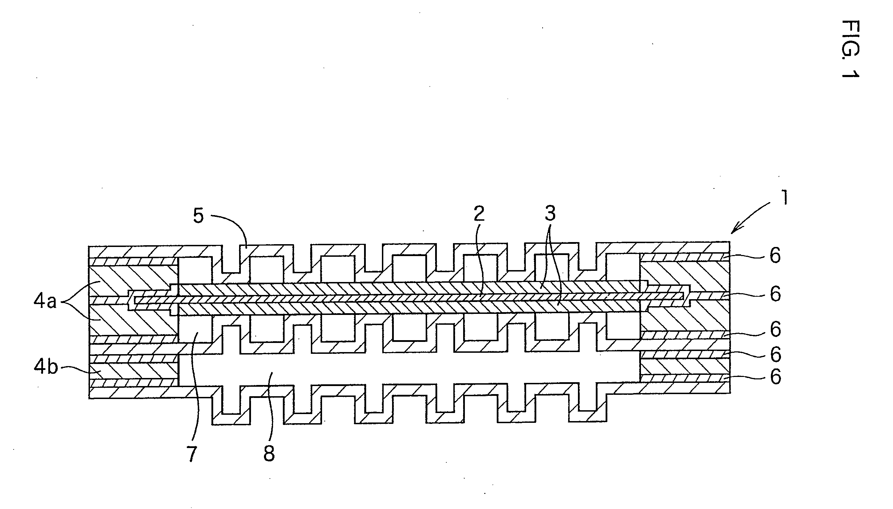

FIG. 1 is a cross-sectional view showing an example of the fuel cell sealed body according to the present invention.

### EMBODIMENTS OF THE INVENTION

Next, the embodiment according to the present invention will be described in detail. However, the present invention should not be limited to this embodiment.

The rubber composition according to the present invention is a rubber composition used in an adhesive layer included in a fuel cell sealed body, and is any one of the following liquid rubber composition (α) and the following solvent-based rubber composition (β).
(α) a liquid rubber composition containing the following (A1) to (C).
(A1) a rubber component containing at least liquid rubber.
(B) a crosslinking agent composed of an organic peroxide.
(C) at least one adhesive component each selected from the group consisting of a resorcinol-based compound, a melamine-based compound, an aluminate-based coupling agent and a silane coupling agent.
(β) a solvent-based rubber composition containing a solvent together with the following (A2) to (C).
(A2) at least one rubber component each selected from the group consisting of ethylene-propylene rubber, ethylene-propylene-diene rubber, acrylonitrile-butadiene rubber and hydrogenated acrylonitrile-butadiene rubber.
(B) a crosslinking agent composed of an organic peroxide.
(C) at least one adhesive component each selected from the group consisting of a resorcinol-based compound, a melamine-based compound, an aluminate-based coupling agent and a silane coupling agent.

### <Liquid rubber composition (α)>

First, the liquid rubber composition (α) containing the foregoing (A1) to (C) will be described.

### <<Specific rubber component (A1)>>

The specific rubber (A1) in the liquid rubber composition (α) according to the present invention predominates in the liquid rubber composition (α) and usually accounts for more than half of the whole liquid rubber composition (α).

It is necessary to allow at least liquid rubber to be contained in the specific rubber component (A1).

In the present invention, liquid rubber refers to rubber which is liquid at ordinary temperature and has a viscosity of 1000 Pa·s or lower.

Examples of the liquid rubber include liquid ethylene-propylene rubber (liquid EPM), liquid ethylene-propylene-diene rubber (liquid EPDM), liquid acrylonitrile-butadiene rubber (liquid NBR), liquid hydrogenated acrylonitrile-butadiene rubber (liquid H-NBR) and the like. These are used alone or in combination of two or more thereof. Of these, in the point of sealing property, the liquid EPM and liquid EPDM are preferred.

From the viewpoint of enhancing the sealing property at an extremely low temperature, the ethylene content of the liquid EPM or liquid EPDM is preferably 60% by weight or less, and especially preferably 53% by weight or less.

The specific rubber component (A1) has the possibility of containing rubber other than liquid rubber (hereinafter, sometimes referred to also as "solid rubber") together with liquid rubber.

In this connection, in the present specification, "solid rubber" has a meaning related to the "liquid rubber", and usually means rubber which is solid at ordinary temperature and is kneadable thereinto.

Examples of the solid rubber include ethylene-propylene rubber (EPM), ethylene-propylene-diene rubber (EPDM), acrylonitrile-butadiene rubber (NBR), hydrogenated acrylonitrile-butadiene rubber (H-NBR) and the like. These may be used alone and may be used mixedly in combination of two or more thereof. Moreover, two or more similar kinds of rubber differing in Mooney viscosity may be used mixedly.

The content of the liquid rubber is preferably 40% by weight or more, especially preferably 60% by weight or more, and most preferably 80% by weight or more, in the whole specific rubber component (A1) (liquid rubber + solid rubber). When the content of the liquid rubber is too small, the viscosity of the rubber composition becomes high and there is a tendency for the coating properties to deteriorate.

The Mooney viscosity of the specific rubber component (A1) is preferably 100 [ML(1+4)100°C] or less, and especially preferably 60 [ML(1+4)100°C] or less. When the Mooney viscosity lies within the above-mentioned range, the fluidity of the liquid rubber composition becomes high and the coating properties are enhanced.

In this connection, in the present specification, the Mooney viscosity means a value measured in accordance with JIS K6300-1 (2001).

From the viewpoints of acid resistance and water resistance under an actuation environment of a fuel cell, it is preferred that the specific rubber component (A1) contain EPDM (liquid EPDM, or liquid EPDM and solid EPDM). It is preferred that the amount of diene (the mass ratio of the diene component) in the EPDM lie within the range of 4 to 15% by weight.

As the diene component in the EPDM, for example, a diene-based monomer with 5 to 20 carbon atoms is preferred, and specifically, examples thereof include 1,4-pentadiene, 1,4-hexadiene, 1,5-hexadiene, 2,5-dimethyl-1,5-hexadiene, 1,4-octadiene, 1,4-cyclohexadiene, cyclooctadiene, dicyclopentadiene (DCP), 5-ethylidene-2-norbornene (ENB), 5-butylidene-2-norbornene, 2-methallyl-5-norbornene, 2-isopropenyl-5-norbornene and the like.

### <<Specific crosslinking agent (B)>>

The specific crosslinking agent (B) is one that is composed of an organic peroxide. Examples of the organic peroxide include a peroxy ketal, a peroxy ester, a diacyl peroxide, a peroxydicarbonate, a dialkyl peroxide, a hydroperoxide and the like. These are used alone or in combination of two or more thereof. Of these organic peroxides, for example, one that is composed of an organic peroxide having a 1-hour half-life temperature of 160°C or lower is preferably used. Then, in order to allow the rubber member and an electrolyte membrane to be bonded together, it is more preferred that an organic peroxide having a 1-hour half-life temperature of 130°C or lower be used. Furthermore, of these, at least one of a peroxy ketal and a peroxy ester which have a 1-hour half-life temperature of 100°C or higher is preferred, for the reason that they are easily crosslinked at a temperature of about 130°C and the rubber composition prepared by adding the crosslinking agent and kneading them is excellent in handling properties, and especially preferably, one that has a 1-hour half-life temperature of 110°C or higher is satisfactory. Moreover, when a peroxy ester is used, crosslinking can be effected in less time.

In the present invention, with regard to the crosslinking agent (B), "half-life" in an organic peroxide having a 1-hour half-life temperature of 160°C or lower refers to the time required for the concentration of an organic peroxide (the amount of active oxygen) to fall to half its initial value. Accordingly, "half-life temperature" serves as an index for indicating a decomposition temperature of an organic peroxide. The "1-hour half-life temperature" refers to a temperature at which the half-life becomes 1 hour. In short, the lower the 1-hour half-life temperature is, the lower the decomposition temperature of an organic peroxide becomes. By using an organic peroxide having a 1-hour half-life temperature of 160°C or lower, crosslinking can be effected at a lower temperature (specifically 150°C or lower) and in a short time. Thus, for example, even in the vicinity of an electrolyte membrane disposed to a solid polymer type fuel cell, the fuel cell sealed body according to the present invention can be used.

Examples of the peroxy ketal include
n-butyl-4,4-di(t-butylperoxy)valerate,
2,2-di(t-butylperoxy)butane,
2,2-di(4,4-di(t-butylperoxy)cyclohexyl)propane,
1,1-di(t-butylperoxy)cyclohexane,
1,1-di(t-hexylperoxy)cyclohexane,
1,1-di(t-hexylperoxy)-3,3,5-trimethylcyclohexane,
1,1-di(t-butylperoxy)-2-methylcyclohexane and the like.

Examples of the peroxy ester include t-butyl peroxybenzoate, t-butyl peroxyacetate, t-hexyl peroxybenzoate, 2,5-dimethyl-2,5-di(benzoylperoxy)hexane, t-butyl peroxy-2-ethylhexyl monocarbonate, t-butyl peroxylaurate, t-butyl peroxyisopropyl monocarbonate, t-butyl peroxy-3,5,5-trimethyl hexanoate, t-butyl peroxymaleic acid, and t-hexyl peroxyisopropyl monocarbonate.

Among these, 1,1-di(t-butylperoxy)cyclohexane, t-butyl peroxyacetate and t-butyl peroxyisopropyl monocarbonate are preferred for the reason that they have a relatively rapid reaction with the specific rubber component (A1). Of these, when t-butyl peroxyisopropyl monocarbonate is used, crosslinking can be effected in less time.

It is preferred that the amount of the specific crosslinking agent (B) blended (in the case of an original substance having a purity of 100%) lie within the range of 0.4 to 12 parts by weight relative to 100 parts by weight of the specific rubber component (A1). When the amount of the specific crosslinking agent (B) blended is too small, there is a tendency that it becomes difficult to allow the crosslinking reaction to sufficiently proceed, and when the amount of the specific crosslinking agent (B) blended is too large, the crosslinking density is rapidly raised at the time of the crosslinking reaction and there is a tendency that the reduction in adhesive force is caused.

### <<Specific adhesive component (C)>>

As the specific adhesive component (C), at least one selected from the group consisting of a resorcinol-based compound, a melamine-based compound, an aluminate-based coupling agent and a silane coupling agent is used.

Examples of the resorcinol-based compound include resorcin, a modified resorcin·formaldehyde resin, a resorcin-formaldehyde (RF) resin and the like. These are used alone or in combination of two or more thereof. Of these, in the point of being low in volatility, low in hygroscopicity and excellent in compatibility with rubber, a modified resorcin·formaldehyde resin is preferred. Examples of the modified resorcin·formaldehyde resin include those that are represented by the following general formulas (1) to (3), and an especially preferred one is one that is represented by the general formula (1). 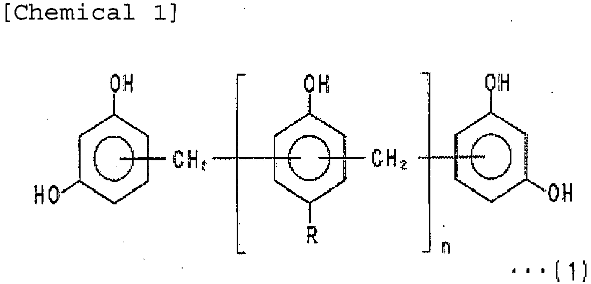 [in the formula, R represents a hydrocarbon group, and n is an integer.] 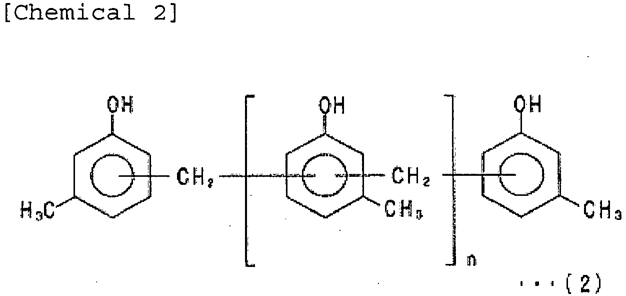 [in the formula, n is an integer.] 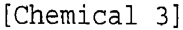 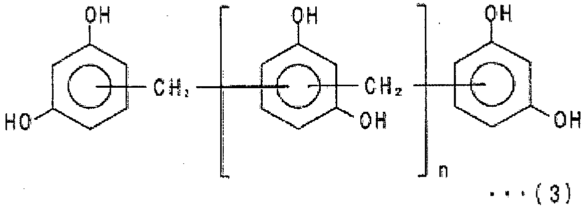 [in the formula, n is an integer.]

It is preferred that the amount of the resorcinol-based compound blended lie within the range of 0.1 to 30 parts by weight, especially preferably within the range of 1 to 15 parts by weight, relative to 100 parts by weight of the specific rubber component (A1). When the amount of the resorcinol-based compound blended is too small, there is a tendency that it becomes difficult to attain desired adhesive force, and when the amount of the resorcinol-based compound blended is too large, there is a tendency for the physical properties of rubber to be lowered.

Examples of the melamine-based compound include a methylated compound prepared from a polymerized product of formaldehyde·melamine, hexamethylene tetramine and the like. These are used alone or in combination of two or more thereof. These decompose under heating on crosslinking and supply the system with formaldehyde. Of these, in the point of being low in volatility, low in hygroscopicity and excellent in compatibility with rubber, a methylated compound prepared from a polymerized product of formaldehyde·melamine is preferred. As the methylated compound prepared from a polymerized product of formaldehyde·melamine, for example, one that is represented by the following general formula (4) is preferred, and especially, a mixture of 43 to 44% by weight of a compound that satisfies the equation of n = 1, 27 to 30% by weight of a compound that satisfies the equation of n = 2, and 26 to 30% by weight of a compound that satisfies the equation of n = 3, in the general formula (4) is preferred. 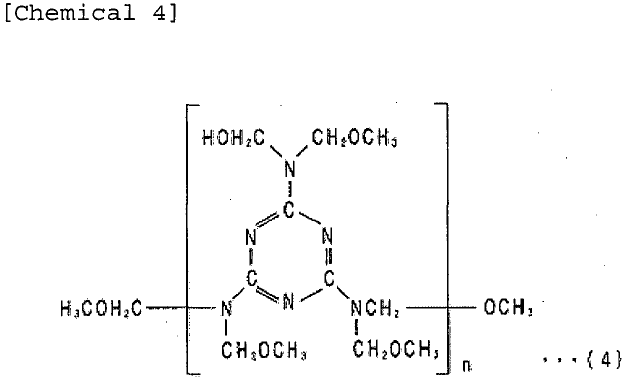 [in the formula, n is an integer.]

In this context, it is preferred that the blending ratio of the resorcinol-based compound to the melamine-based compound lie within the range of 1 : 0.5 to 1 : 2, especially preferably within the range of 1 : 0.77 to 1 : 1.5, in terms of weight ratio. When the blending ratio of the melamine-based compound is too small, there is a tendency for the tensile strength, elongation and the like of rubber to be slightly lowered, and when the blending ratio of the melamine-based compound is too large, the increase in the amount thereof blended leads to an increase in cost since the adhesive force is saturated.

The aluminate-based coupling agent needs only to be appropriately selected from among aluminum organic compounds having a hydrolyzable alkoxy group and a portion that has an affinity with a rubber component in consideration of the adhesivity and the like. Examples thereof include aluminum alkyl acetoacetate·diisopropylate, aluminum ethyl acetoacetate·diisopropylate, aluminum tris ethyl acetoacetate, aluminum isopropylate, aluminum diisopropylate monosecondary butyrate, aluminum secondary butyrate, aluminum ethylate, aluminum bis ethyl acetoacetate·monoacetylacetonate, aluminum tris acetylacetonate, aluminum monoisopropoxy monoolexyethyl acetoacetate, and the like. These are used alone or in combination of two or more thereof. Of these, aluminum alkyl acetoacetate·diisopropylate, aluminum ethyl acetoacetate·diisopropylate, and aluminum tris ethyl acetoacetate are preferred.

It is preferred that the amount of the aluminate-based coupling agent blended lie within the range of 0.5 to 20 parts by weight, especially preferably within the range of 3 to 15 parts by weight, relative to 100 parts by weight of the specific rubber component (A1). When the amount of the aluminate-based coupling agent blended is too small, there is a tendency that it becomes difficult to attain desired adhesive force, and when the amount of the aluminate-based coupling agent blended is too large, the reduction in physical properties of rubber is caused and there is also a tendency for the processability to be lowered.

The silane coupling agent needs only to be appropriately selected from among compounds having an epoxy group, an amino group, a vinyl group and the like as the functional group in consideration of the adhesivity and the like. Examples thereof include vinyltrimethoxysilane, vinyltriethoxysilane, vinyl-tris(2-methoxyethoxy)silane, 3-methacryloxypropyltrimethoxysilane, 3-methacryloxypropyltriethoxysilane, 3-glycidoxypropyltrimethoxysilane, 3-glycidoxypropyltriethoxysilane, 3-glycidoxypropylmethyldiethoxysilane, 2-(3,4-epoxycyclohexyl)ethyltrimethoxysilane, N-2(aminoethyl)3-aminopropyltrimethoxysilane, 3-aminopropyltrimethoxysilane, N-phenyl-3-aminopropyltrimethoxysilane, and the like. Moreover, in order to prevent volatilization, oligomers formed by allowing these compounds to be linked together are also used. These are used alone or in combination of two or more thereof. When one or more of these agents selected from among compounds having an epoxy group or a vinyl group are used, the adhesive force is enhanced and even under an actuation environment of a fuel cell, the adhesive force is hardly lowered. Specifically, 3-glycidoxypropyltrimethoxysilane, 3-glycidoxypropyltriethoxysilane, 3-glycidoxypropylmethyldiethoxysilane, 2-(3,4-epoxycyclohexyl)ethyltrimethoxysilane, vinyltrimethoxysilane, vinyltriethoxysilane, vinyl-tris(2-methoxyethoxy)silane, and the like are preferred.

It is preferred that the amount of the silane coupling agent blended lie within the range of 0. 5 to 20 parts by weight, especially preferably within the range of 5 to 10 parts by weight, relative to 100 parts by weight of the specific rubber component (A1). When the amount of the silane coupling agent blended is too small, there is a tendency that it becomes difficult to attain desired adhesive force, and when the amount of the silane coupling agent blended is too large, the reduction in physical properties of rubber is caused and there is also a tendency for the processability to be lowered.

In this connection, the liquid rubber composition (α) used in the present invention has the possibility of being blended with various additives used for an ordinary rubber composition such as a crosslinking auxiliary (D), a softening agent, a reinforcing agent, a plasticizing agent, an anti-oxidizing agent, a tackifier and a processing aid, other than the foregoing (A1) to (C).

### <<Crosslinking auxiliary (D)>>

Examples of the crosslinking auxiliary include a maleimide compound, triallyl cyanurate (TAC), triallyl isocyanurate (TAIC), trimethylolpropane trimethacrylate (TMPT) and the like. These are used alone or in combination of two or more thereof. Of these, it is preferred that a maleimide compound be used for the reason that it has a great effect of raising the crosslinking density and enhancing the strength.

It is preferred that the amount of the crosslinking auxiliary (D) blended lie within the range of 0.1 to 3 parts by weight relative to 100 parts by weight of the specific rubber component (A1). When the amount of the crosslinking auxiliary blended is too small, there is a tendency that it becomes difficult to allow the crosslinking reaction to sufficiently proceed, and when the amount of the crosslinking auxiliary blended is too large, the crosslinking density becomes too high and there is a tendency for the adhesive force to be lowered.

### <<Softening agent>>

Examples of the softening agent include a petroleum-based softening agent such as process oil, lubricating oil, paraffin, liquid paraffin and Vaseline, a fatty oil-based softening agent such as castor oil, linseed oil, rapeseed oil and coconut oil, waxes such as tall oil, sub, beeswax, carnauba wax and lanolin, linoleic acid, palmitic acid, stearic acid, lauric acid, and the like.

The amount of the softening agent blended is usually 40 parts by weight or less relative to 100 parts by weight of the specific rubber component (A1).

Of these softening agents, a softening agent with a pour point of -40°C or lower is preferred, and examples thereof include a poly-α-olefin, dioctyl phthalate (DOP), dioctyl adipate (DOA), dioctyl sebacate (DOS), dibutyl sebacate (DBS), and the like. These are used alone or in combination of two or more thereof. Of these, from the viewpoints of being satisfactory in compatibility with the specific rubber component (A) and hardly causing bleeding, a poly-α-olefin is preferred. The poly-α-olefin is one that is prepared by allowing α-olefins with 6 to 16 carbon atoms to undergo polymerization. With regard to the poly-α-olefin, the smaller the molecular weight is, the lower the viscosity is, and also, the lower the pour point is.

With regard to the softening agent, the lower the pour point is, the more it is difficult to be hardened at an extremely low temperature. Thus, the lower the pour point thereof is, the greater the inhibitory effect on crystallization of the rubber component at an extremely low temperature is. A more preferred pour point of the softening agent is -40°C or lower. On the other hand, when the pour point is too low, the softening agent becomes liable to volatilize at the time of actuating a fuel cell or the like. Accordingly, it is desirable that the pour point of the softening agent be -80°C or higher.

In this connection, the measurement of the pour point may be performed in accordance with JIS K2269 (1987).

### <<Reinforcing agent>>

Examples of the reinforcing agent include carbon black, silica and the like. The grade of the carbon black is not particularly limited, and it needs only to be appropriately selected from SAF class, ISAF class, HAF class, MAF class, FEF class, GPF class, SRF class, FT class, MT class and the like.

The amount of the reinforcing agent blended usually lies within the range of 10 to 150 parts by weight relative to 100 parts by weight of the specific rubber component (A1).

Examples of the plasticizing agent include an organic acid derivative such as dioctyl phthalate (DOP) and a phosphoric acid derivative such as tricresyl phosphate.

The amount of the plasticizing agent blended is usually 40 parts by weight or less relative to 100 parts by weight of the specific rubber component (A1).

Examples of the anti-oxidizing agent include a phenol-based one, an imidazole-based one, a wax, and the like. The amount of the anti-oxidizing agent blended usually lies within the range of 0.5 to 10 parts by weight relative to 100 parts by weight of the specific rubber component (A1).

### <Solvent-based rubber composition (β)>

Next, the solvent-based rubber composition (β) containing the foregoing (A2) to (C) will be described.

### <<Specific rubber component (A2)>>

The specific rubber (A2) in the solvent-based rubber composition (β) according to the present invention predominates in the solvent-based rubber composition (β) and usually accounts for more than half of the whole solvent-based rubber composition (β) (provided that it is expressed as the solid content weight excluding the solvent).

As the specific rubber component (A2), at least one selected from the group consisting of ethylene-propylene rubber (EPM), ethylene-propylene-diene rubber (EPDM), acrylonitrile-butadiene rubber (NBR) and hydrogenated acrylonitrile-butadiene rubber (H-NBR) is used. These may be used alone and may be used mixedly in combination of two or more thereof. Moreover, two or more similar kinds of rubber differing in Mooney viscosity described below may be used mixedly.

From the viewpoint of enhancing the sealing property at an extremely low temperature, the ethylene content of the ethylene-propylene rubber (EPM) or ethylene-propylene-diene rubber (EPDM) is preferably 60% by weight or less, and especially preferably 53% by weight or less.

The Mooney viscosity of the specific rubber component (A2) is preferably 100 [ML(1+4)100°C] or less, and especially preferably 60 [ML(1+4)100°C] or less. When the Mooney viscosity lies within the above-mentioned range, the fluidity of the solvent-based rubber composition (β) becomes high and the coating properties are enhanced.

In this connection, in the present specification, the Mooney viscosity means a value measured in accordance with JIS K6300-1 (2001).

From the viewpoints of acid resistance and water resistance under an actuation environment of a fuel cell, it is preferred that the specific rubber component (A2) contain EPDM. It is preferred that the amount of diene (the mass ratio of the diene component) in the EPDM lie within the range of 4 to 15% by weight.

As the diene component in the EPDM, for example, a diene-based monomer with 5 to 20 carbon atoms is preferred, and specifically, examples thereof include 1,4-pentadiene, 1,4-hexadiene, 1,5-hexadiene, 2,5-dimethyl-1,5-hexadiene, 1,4-octadiene, 1,4-cyclohexadiene, cyclooctadiene, dicyclopentadiene (DCP), 5-ethylidene-2-norbornene (ENB), 5-butylidene-2-norbornene, 2-methallyl-5-norbornene, 2-isopropenyl-5-norbornene and the like.

### <<Specific crosslinking agent (B)>>

Examples of the organic peroxide constituting the specific crosslinking agent (B) include one that is the same as a specific crosslinking agent (B) used for the liquid rubber composition (α) described above, and the amount thereof blended is also the same as that set as described above.

### <<Specific adhesive component (C)>>

The specific adhesive component (C) is a component in which at least one selected from the group consisting of a resorcinol-based compound, a melamine-based compound, an aluminate-based coupling agent and a silane coupling agent is used, examples thereof include one that is the same as a specific adhesive component (C) used for the liquid rubber composition (α) described above, and the amount thereof blended is also the same as that set as described above.

### <<Solvent>>

In the solvent-based rubber composition (β), a solvent is used together with the foregoing (A2) to (C). Examples of the solvent include an organic solvent such as tetrahydrofuran (THF), toluene, methylcyclohexane, n-heptane, m-cresol, methanol, methyl ethyl ketone (MEK), acetone, ethyl acetate, dimethylformamide (DMF) and N-methyl-2-pyrrolidone (NMP), and the like. These are used alone or in combination of two or more thereof. Of these, in the point of solubility of rubber, THF, toluene, methylcyclohexane and n-heptane are preferred.

With regard to the amount of the solvent blended, the solvent is blended so that the solid content of the rubber composition becomes preferably 5 to 40% by weight, especially preferably 10 to 30% by weight. When the amount of the solvent blended is too small, there is a tendency for the coating properties to decrease, and when the amount of the solvent blended is too large, there is a tendency that it becomes difficult to attain desired adhesive force.

In this connection, the solvent-based rubber composition (β) used in the present invention has the possibility of being blended with various additives used for an ordinary rubber composition such as a crosslinking auxiliary (D), a softening agent, a reinforcing agent, a plasticizing agent, an anti-oxidizing agent, a tackifier and a processing aid, other than the foregoing (A2) to (C), as in the case of the liquid rubber composition (α) described above.

With regard to the above-mentioned various additives such as a crosslinking auxiliary (D), a softening agent, a reinforcing agent, a plasticizing agent, an anti-oxidizing agent, a tackifier and a processing aid, those that are the same as those used for the liquid rubber composition (α) described above are used, and the amount thereof blended is also the same as one employed for the liquid rubber composition (α) described above.

### (Rubber member for sealing)

As the rubber member for sealing (hereinafter, sometimes referred to also as "sealing rubber member"), rubber crosslinked with an organic peroxide (a crosslinking agent) is preferred, and specifically, examples thereof include the previously exemplified solid rubber (EPM, EPDM, NBR, H-NBR), and the like. Of these, from the viewpoint of enhancing the sealing property at an extremely low temperature, EPM or EPDM with an ethylene content of 60% by weight or less, especially preferably 53% by weight or less, is preferred.

As a rubber composition that forms the sealing rubber member, the specific crosslinking agent (B) can also be used together with the solid rubber. Moreover, the rubber composition that forms the sealing rubber member has the possibility of being blended with additives other than the adhesive component (C), for example, various additives used for an ordinary rubber composition such as a crosslinking auxiliary, a softening agent, a reinforcing agent, a plasticizing agent, an anti-oxidizing agent, a tackifier and a processing aid.

### (Fuel cell sealed body)

Examples of the fuel cell sealed body according to the present invention include one prepared by allowing a constituting member for a fuel cell and a rubber member for sealing it to be bonded together through an adhesive layer, one prepared by allowing the two rubber members for sealing the constituting member for a fuel cell to be bonded together through an adhesive layer, or the like.

Although the constituting member for a fuel cell sealed with the rubber member varies with the kind, structure and the like of the fuel cell, examples thereof include a separator (metal separator and the like), a gas diffusion layer (GDL), an MEA (electrolyte membrane, electrode), and the like.

FIG. 1 is one that mainly shows a single cell 1 in a fuel cell prepared by allowing a plurality of cells to be stacked, and the cell 1 is provided with an MEA 2, a gas diffusion layer (GDL) 3, a rubber member 4a, a separator 5, and an adhesive layer 6. Moreover, the separator 5 and a separator 5 disposed to a cell (not shown) which is adjacent thereto in the stacking direction and turning its back thereto are bonded to a rubber member 4b through an adhesive layer 6.

Examples of the fuel cell sealed body according to the present invention include, as shown in FIG. 1, one prepared by allowing the separator 5 and the rubber members 4a, 4b to be bonded together through an adhesive layer 6, one prepared by allowing the MEA 2 and the rubber member 4a to be bonded together through an adhesive layer 6, one prepared by allowing the gas diffusion layer 3 and the rubber member 4a to be bonded together through an adhesive layer 6, one prepared by allowing the two rubber members adjacent to each other to be bonded together through an adhesive layer 6, and the like.

The MEA 2 is, although not shown in the FIG., composed of a pair of electrodes which are arranged, with an electrolyte membrane sandwiched therebetween, on both sides thereof in the stacking direction. The electrolyte membrane and the pair of electrodes have a rectangular thin plate-like shape. The gas diffusion layers 3 are arranged, with the MEA 2 sandwiched therebetween, on both sides thereof in the stacking direction. The gas diffusion layer 3 is a porous layer and has a rectangular thin plate-like shape.

As the separator 5, one made of metal such as titanium is preferred, and from the viewpoint of conduction reliability, a metal separator having a carbon thin film such as a DLC film (a diamond-like carbon film) and a graphite film is especially preferred. The separator 5 has a rectangular thin plate-like shape, six grooves in total extending along the longitudinal direction are recessed, and these grooves allow the cross section of the separator 5 to have a concave-convex shape. The separators 5 are oppositely arranged, with the gas diffusion layers 3, on both sides thereof in the stacking direction. The space between the gas diffusion layer 3 and the separator 5 is partitioned into gas passages 7 for supplying the electrode with a gas by taking advantage of the concave-convex shape. Moreover, the space between the separator 5 and a separator 5 disposed to a cell (not shown) which is adjacent thereto in the stacking direction and turning its back thereto is partitioned off as a refrigerant passage 8 for passing a refrigerant therethrough by taking advantage of the concave-convex shape.

The rubber member 4a for sealing has a rectangular frame-like shape, and the thickness in the stacking direction thereof is thicker than that of the rubber member 4b for sealing. The rubber member 4a is bonded to the peripheral parts of the MEA 2 and the gas diffusion layer 3 and to the separator 5 through an adhesive layer 6, and the peripheral parts of the MEA 2 and the gas diffusion layer 3 are sealed. In this connection, although the rubber member 4a shown in FIG. 1 is divided into two upper and lower members, the rubber member 4a has the possibility of being a single rubber member prepared by uniting the two members.

The rubber member 4b for sealing has a rectangular frame-like shape, and the thickness in the stacking direction thereof is thinner than that of the rubber member 4a for sealing. The rubber member 4b is bonded to a separator 5 disposed to a cell (not shown) which is adjacent thereto in the stacking direction and turning its back thereto through an adhesive layer 6. With the rubber member 4b, the space between the separator 5 and a separator 5 turning its back thereto is partitioned off as a refrigerant passage 8 and sealed.

At the time of actuating a fuel cell such as a solid polymer type fuel cell, a fuel gas and an oxidizer gas each are supplied through gas passages 7. Moreover, in order to alleviate heat generated on power generation, the refrigerant is allowed to flow through the refrigerant passage 8. In this context, the peripheral part of the MEA 2 is sealed with the rubber member 4a for sealing through an adhesive layer 6. As such, mixing of the gases and leakage thereof do not occur. Moreover, the space between the separator 5 and a separator 5 disposed to a cell (not shown) which is adjacent thereto in the stacking direction and turning its back thereto is also sealed with the rubber member 4b for sealing through an adhesive layer 6. As such, the refrigerant hardly leaks from the refrigerant passage 8 to the outside.

For example, the fuel cell sealed body according to the present invention can be prepared in the following manner. That is, for example, the rubber member for sealing can be obtained by preparing a rubber composition containing the EPDM, an organic peroxide (a crosslinking agent) and various additives blended as necessary and allowing this composition to be crosslinked under a prescribed condition (130 to 170°C × 3-30 minutes). It is preferred that the rubber member be formed into a prescribed shape according to the shape of the sealing part. In this case, since the complicated alignment of the rubber member with the constituting member for a fuel cell is dispensed with, the continuous processing is easily performed and the productivity of a fuel cell can be further enhanced. In this connection, as the sealing member, it is also possible to use unvulcanized rubber.

On the other hand, for example, the liquid rubber composition (α) for the adhesive layer can be prepared in the following manner. That is, first, materials other than the crosslinking agent (B), the adhesive component (C) and the crosslinking auxiliary (D) are premixed and kneaded for a few minutes at 80 to 140°C. Next, the kneaded product obtained is cooled, and the crosslinking agent (B), the adhesive component (C) and the crosslinking auxiliary (D) blended as necessary are added thereto. Then, using rolls such as an open roll, the mixture is kneaded for 5 to 30 minutes at a roll temperature of 40 to 70°C. In this connection, the adhesive component (C) has the possibility of being blended at the stage of premixing.

The viscosity (ordinary temperature) of the liquid rubber composition (α) measured by a B-type viscometer is usually 10000 Pa·s or lower, and preferably 500 to 5000 Pa·s.

Moreover, for example, the solvent-based rubber composition (β) for the adhesive layer can be prepared in the following manner. That is, first, materials other than the crosslinking agent (B), the adhesive component (C) and the crosslinking auxiliary (D) are premixed and kneaded for a few minutes at 80 to 140°C. Next, the kneaded product obtained is cooled, and the crosslinking agent (B), the adhesive component (C) and the crosslinking auxiliary (D) blended as necessary are added thereto. Then, using rolls such as an open roll, the mixture is kneaded for 5 to 30 minutes at a roll temperature of 40 to 70°C. In this connection, the adhesive component (C) has the possibility of being blended at the stage of premixing. Next, by allowing the kneaded product to be diluted to a prescribed concentration with a solvent, a solvent-based rubber composition (β) can be prepared.

The viscosity (ordinary temperature) of the solvent-based rubber composition (β) measured by a B-type viscometer is usually 4000 Pa·s or lower, and preferably 2500 to 3000 Pa·s.

Next, by allowing the liquid rubber composition (α) or the solvent-based rubber composition (β) to be applied to any one or both of a constituting member for a fuel cell such as a metal separator and a rubber member for sealing it, the fuel cell sealed body according to the present invention prepared by allowing a constituting member for a fuel cell such as a metal separator and a rubber member to be bonded together through an adhesive layer can be obtained.

Then, as a coating method in the case of using the liquid rubber composition (α), examples thereof include dispenser coating and the like, and usually, the composition needs onlyto be applied under a condition of ordinary temperature. Moreover, as a coating method in the case of using the solvent-based rubber composition (β), examples thereof include spray coating, dispenser coating and the like, and usually, the composition needs only to be applied under a condition of ordinary temperature.

The thickness of an adhesive layer in the fuel cell sealed body according to the present invention is usually 0.01 to 0.5 mm, and preferably 0.05 to 0.3 mm.

### EXAMPLES

Hereinafter, the present invention will be described in more detail with reference to examples, but the present invention should not be limited to the following examples without departing from the gist thereof. In this connection, in examples, "part" and "%" refer to those by weight.

### 〈Liquid rubber composition (α)〉

First, prior to Examples and Comparative Examples, the materials for a rubber composition shown below were prepared.

### 〈〈Specific rubber component (A1)〉〉

### [Liquid EPDM (Aa1)]

MITSUI PX 068 available from Mitsui Chemicals, Inc. (Brookfield rotational viscosity = 10 Pa·s/ordinary temperature, the amount of ethylene = 50%, the amount of diene = 11%) [EPDM (Aa2)]

ESPRENE 505 available from Sumitomo Chemical Co., Ltd. (Mooney viscosity = 75 [ML(1+4)100°C], the amount of ethylene = 50%, the amount of diene = 10%)

### [EPDM (Aa3)]

JSR EP27 available from JSR Corporation (Mooney viscosity = 105 [ML (1+4) 100°C], the amount of ethylene = 54%, the amount of diene = 4.5%)

### 〈〈Specific crosslinking agent (B)〉〉

### [Peroxy ketal (B1)]

1,1-Di(t-butylperoxy)cyclohexane (PERHEXA C-40 available from NOF CORPORATION, 40% purity, the 1-hour half-life temperature = 111.1°C)

### [Dialkyl peroxide (B2)]

PERHEXYN 25B-40 available from NOF CORPORATION, 40% purity, the 1-hour half-life temperature = 149.9°C)

### 〈〈Adhesive component (C)〉〉

### [Resorcinol-based compound (C1)]

TACKIROL 620 available from Taoka Chemical Co., Ltd.

### [Melamine-based compound (C2)]

SUMIKANOL 507AP available from Sumitomo Chemical Co., Ltd.

### [Silane coupling agent (C3)]

3-Glycidoxypropyltrimethoxysilane (KBM403 available from Shin-Etsu Chemical Co., Ltd.)

### 〈〈Crosslinking auxiliary (D)〉〉

### [Maleimide compound (D1)]

VULNOC PM available from OUCHI SHINKO CHEMICAL INDUSTRIAL CO., LTD.

### 〈〈Softening agent (E)〉〉

### [Paraffin-based process oil (E1)]

Diana Process Oil PW380 available from Idemitsu Kosan Co., Ltd. (the pour point = -15°C)

### 〈〈Reinforcing agent (F)〉〉

### [Carbon black (GPF class) (F1)]

SHOBLACK IP200 available from Cabot Corporation [Silica (F2)]

CARPLEX 1120 available from Degussa Japan Co., Ltd.

### 〈〈Solvent〉〉

Tetrahydrofuran (THF)

### [Example 1a]

### (Preparation of liquid rubber composition for adhesive layer)

The components shown in Table 1 below each were blended in the proportion shown in the table to prepare a liquid rubber composition. That is, first, a rubber component (A1), a softening agent (E) and a reinforcing agent (F), shown in Table 1, were kneaded for 5 minutes at 120°C using a Banbury mixer. After cooling the kneaded product, a crosslinking agent (B), an adhesive component (C) and a crosslinking auxiliary (D) were added thereto, and the mixture was kneaded for 10 minutes at 50°C using an open roll to prepare a liquid rubber composition (the viscosity measured by a B-type viscometer: 3000 Pa·s/ordinary temperature).

### (Preparation of vulcanized rubber for sealing)

Using a Banbury mixer, 100 parts of EPDM (ESPRENE 505 available from Sumitomo Chemical Co., Ltd.), 10 parts of a paraffin-based process oil (Diana Process Oil PW380 available from Idemitsu Kosan Co., Ltd.), 35 parts of GPF class carbon black (SHOBLACK IP200 available from Cabot Corporation) and 10 parts of silica (CARPLEX 1120 available from Degussa Japan Co. , Ltd.) were kneaded for 5 minutes at 120°C. After cooling the kneaded product, 5 parts of peroxy ketal [1,1-di(t-butylperoxy)cyclohexane (PERHEXA C-40 available from NOF CORPORATION) was added thereto, and the mixture was kneaded for 10 minutes at 50°C using an open roll to prepare a rubber composition. Then, this rubber composition was crosslinked for 10 minutes at 150°C, after which the composition was cut into a rubber piece to prepare vulcanized rubber for sealing (5 mm in thickness, size of 25 mm × 60 mm).

**[Table 1]**

| (Parts) | | | | | | | | | |
|---|---|---|---|---|---|---|---|---|---|
| | Example | | | | | | | | Comparative Example |
| | 1a | 2a | 3a | 4a | 5a | 6a | 7a | 8a | 1a |
| Liquid EPDM (Aa1) | 40 | 60 | 80 | 100 | 80 | 40 | 80 | 40 | - |
| EPDM (Aa2) | 60 | 40 | 20 | - | 20 | 60 | 20 | 60 | - |
| EPDM (Aa3) | - | - | - | - | - | - | - | - | 100 |
| Peroxy ketal (B1) | 5 | 5 | 5 | 5 | 5 | 5 | - | - | 5 |
| Dialkyl peroxide (B2) | - | - | - | - | - | - | 5 | 5 | - |
| Resorcinol-based compound (C1) | 2 | 2 | 2 | 2 | 2 | 2 | 2 | 2 | - |
| Melamine-based compound (C2) | 1.5 | 1.5 | 1.5 | 1.5 | 1.5 | 1.5 | 1.5 | 1.5 | - |
| Silane coupling agent (C3) | 5 | 5 | 5 | 5 | 5 | 5 | 5 | 5 | - |
| Maleimide compound (D1) | 0.5 | 1 | 0.5 | 0.5 | - | 0.5 | - | 0.5 | 0.5 |
| Paraffin-based process oil (E1) | 10 | 10 | 10 | 10 | 10 | 10 | 10 | 10 | 10 |
| Carbon black (F1) | 35 | 35 | 45 | 45 | 45 | 35 | 45 | 35 | 45 |
| Silica (F2) | 10 | 10 | 10 | 10 | 10 | 10 | 10 | 10 | - |
| Tetrahydrofuran (solvent) | - | - | - | - | - | - | - | - | ○ |
| Adhesivity to vulcanized rubber (vulcanized rubber/adhesive layer) | ○ | ○ | ○ | ○ | ○ | - | ○ | - | × |
| Adhesivity to metal (vulcanized rubber/adhesive layer/metal) | ○ | ○ | ○ | ○ | ○ | - | ○ | - | × |
| Adhesivity to electrolyte membrane (vulcanized rubber/adhesive layer/electrolyte membrane) | ○ | ○ | ○ | ○ | ○ | - | ○ | - | × |
| Adhesivity to metal (unvulcanized rubber/adhesive layer/metal) | - | - | - | - | - | ○ | - | ○ | - |
| Adhesivity to electrolyte membrane (unvulcanized rubber/adhesive layer/electrolyte membrane) | - | - | - | - | - | ○ | - | ○ | - |

The liquid rubber composition and the vulcanized rubber obtained in this way were evaluated for various properties according to the following criteria. The results are combinedly shown in the Table 1.

### [Adhesivity to vulcanized rubber (vulcanized rubber/adhesive layer)]

The 90° peeling test was performed in accordance with JIS K6256-2 (2006) and the adhesivity was evaluated. That is, the above-prepared liquid rubber composition was applied on one side of the above-prepared vulcanized rubber (5 mm in thickness, size of 25 mm × 60 mm) by a dispenser method using JETMERTER2 available from Musashi engineering Co., Ltd. (conditions: injection speed of 60 mm/sec, injection pressure of 0.05 to 0.06 MPa), and this was held for 30 minutes at 150°C to prepare a test specimen (0.1 mm in thickness of the adhesive layer) by allowing them to be crosslinked and bonded together. Next, the test specimen was fitted to a prescribed test jig, subjected to a 90° peeling test, and evaluated for the adhesivity. With regard to the evaluation criteria, one that allows rubber destruction to occur is defined as being O, and one that allows interfacial peeling to occur is defined as being x.

### [Adhesivity to metal (vulcanized rubber/adhesive layer/metal)]

The 90° peeling test was performed in accordance with JIS K6256-2 (2006) and the adhesivity was evaluated. That is, the above-prepared liquid rubber composition was applied on the surface of a titanium plate (5 mm in thickness, size of 25 mm × 60 mm) by a dispenser method using JETMERTER2 available from Musashi engineering Co., Ltd. (conditions: injection speed of 60 mm/sec, injection pressure of 0.05 to 0.06 MPa). Next, the above-prepared vulcanized rubber (5 mm in thickness, size of 25 mm × 60 mm) was arranged on the surface. Then, this was held for 30 minutes at 150°C while being pressed from the vulcanized rubber side to prepare a test specimen (0.1 mm in thickness of the adhesive layer) by allowing them to be crosslinked and bonded together. Next, the test specimen was fitted to a prescribed test jig, subjected to a 90° peeling test, and evaluated for the adhesivity. With regard to the evaluation criteria, one that allows rubber destruction to occur is defined as being ○, and one that allows interfacial peeling to occur is defined as being ×.

### [Adhesivity to electrolyte membrane (vulcanized rubber/adhesive layer/electrolyte membrane)]

A test specimen was evaluated for the adhesivity in the same manner as above except that an electrolyte membrane (0.001 mm in thickness, size of 10 mm × 50 mm) composed of a fluorine-based resin (Nafion available from Du Pont K. K.) was used instead of the titanium plate in the evaluation of the adhesivity to metal. With regard to the evaluation criteria, one that allows rubber destruction to occur is defined as being ○, and one that allows interfacial peeling to occur is defined as being ×.

### [Examples 2a to 5a, 7a]

A test specimen was evaluated for the adhesivity to vulcanized rubber, the adhesivity to metal and the adhesivity to electrolyte membrane according to Example 1a except that each of rubber compositions shown in the Table 1 was used as the liquid rubber composition for the adhesive layer. The results are combinedly shown in the Table 1. In this connection, the preparation condition (vulcanization condition) of the test specimen prepared from a solvent-based rubber composition in Example 7a was set to 190°C × 30 minutes.

### [Comparative Example 1a]

A test specimen was evaluated for the adhesivity to vulcanized rubber, the adhesivity to metal and the adhesivity to electrolyte membrane according to Example 1a except that a solvent-based rubber composition (the viscosity measured by a B-type viscometer: 2800 Pa·s/ordinary temperature) shown in the Table 1 was used as the rubber composition for the adhesive layer instead of the liquid rubber composition. The results are combinedly shown in the Table 1.

### [Examples 6a, 8a]

A test specimen was evaluated for the adhesivity to metal and the adhesivity to electrolyte membrane according to Example 1a except that an unvulcanized rubber was used instead of the vulcanized rubber for sealing. In this connection, the preparation condition (vulcanization condition) of the test specimen prepared from a solvent-based rubber composition in Example 8a was set to 190°C × 30 minutes.

### (Preparation of unvulcanized rubber)

A rubber composition similar to that used in the preparation of the vulcanized rubber for sealing in Example 1a was prepared. Then, the rubber composition was cut into an unvulcanized rubber piece to prepare unvulcanized rubber for sealing (5 mm in thickness, size of 25 mm × 60 mm).

### [Adhesivity to metal (unvulcanized rubber/adhesive layer/metal)]

The 90° peeling test was performed in accordance with JIS K6256-2 (2006) and the adhesivity was evaluated. That is, the above-prepared liquid rubber composition was applied on the surface of a titanium plate (5 mm in thickness, size of 25 mm × 60 mm) by a dispenser method using JETMERTER2 available from Musashi engineering Co., Ltd. (conditions: injection speed of 60 mm/sec, injection pressure of 0.05 to 0.06 MPa). Next, the above-prepared unvulcanized rubber (5 mm in thickness, size of 25 mm × 60 mm) was arranged on the surface. Subsequently, this was held for 30 minutes at 150°C while being pressed from the unvulcanized rubber side to prepare a test specimen (0.1 mm in thickness of the adhesive layer) by allowing them to be crosslinked and bonded together. Next, the test specimen was fitted to a prescribed test jig, subjected to a 90° peeling test, and evaluated for the adhesivity. With regard to the evaluation criteria, one that allows rubber destruction to occur is defined as being ○, and one that allows interfacial peeling to occur is defined as being ×.

### [Adhesivity to electrolyte membrane (unvulcanized rubber/adhesive layer/electrolyte membrane)]

A test specimen was evaluated for the adhesivity in the same manner as above except that an electrolyte membrane (0.001 mm in thickness, size of 10 mm × 50 mm) composed of a fluorine-based resin (Nafion available from Du Pont K. K.) was used instead of the titanium plate in the evaluation of the adhesivity to metal. With regard to the evaluation criteria, one that allows rubber destruction to occur is defined as being ○, and one that allows interfacial peeling to occur is defined as being ×.

The results shown in the Table 1 reveal that the products in Examples 1a to 8a are excellent in adhesivity to a rubber member (vulcanized rubber, unvulcanized rubber) , a metal or an electrolyte membrane since they allow the adhesive component (C) to be blended in the liquid rubber composition for the adhesive layer. Furthermore, the products in Examples 1a to 8a do not foul molds, require low production costs and are excellent in mass productivity since they do not allow the adhesive component (C) to be blended in the rubber member (vulcanized rubber, unvulcanized rubber) for sealing. Incidentally, it can be said that even among the products in Examples, compared to the products in Examples 7a, 8a [the dialkyl peroxide (B2) is used as a crosslinking agent], the products in Examples 1a to 6a [the peroxy ketal (B1) is used as a crosslinking agent] are preferred because vulcanization at a lower temperature is possible.

In this connection, even in the case where liquid EPM, liquid NBR and liquid H-NBR are used instead of the liquid EPDM (A1) in the liquid rubber composition for the adhesive layer, the evaluation results similar to those in the case where the above-mentioned liquid EPDM is used have been obtained.

In contrast, the product in Comparative Example 1a is poor in adhesivity to a rubber member (vulcanized rubber, unvulcanized rubber), a metal or an electrolyte membrane since it does not allow the adhesive component (C) to be blended in the solvent-based rubber composition for the adhesive layer.

### 〈Solvent-based rubber composition (β)〉

First, prior to Examples and Comparative Examples, the materials for a rubber composition shown below were prepared.

### «Specific rubber component (A2)»

### [EPDM (Ab1)]

JSR EP27 available from JSR Corporation (Mooney viscosity = 105 [ML(1+4)100°C], the amount of ethylene = 54%, the amount of diene = 4.5%)

### [EPDM (Ab2)]

ESPRENE 505 available from Sumitomo Chemical Co., Ltd. (Mooney viscosity = 75 [ML(1+4)100°C], the amount of ethylene = 50%, the amount of diene = 10%)

### [EPDM (Ab3)]

MITSUI EPT 4045M available from Mitsui Chemicals, Inc. (Mooney viscosity = 45 [ML(1+4)100°C], the amount of ethylene = 45%, the amount of diene = 8%)

### [EPDM (Ab4)]

MITSUI EPTX 4010M available from Mitsui Chemicals, Inc. (Mooney viscosity = 8 [ML(1+4)100°C], the amount of ethylene = 54%, the amount of diene = 7.6%)

### «Specific crosslinking agent (B)»

### [Peroxy ketal (B1)]

1,1-Di(t-butylperoxy)cyclohexane (PERHEXA C-40 available from NOF CORPORATION, 40% purity, the 1-hour half-life temperature = 111.1°C)

### [Dialkyl peroxide (B2)]

PERHEXYN 25B-40 available from NOF CORPORATION, 40% purity, the 1-hour half-life temperature = 149.9°C)

### 〈〈Adhesive component (C)〉〉

### [Resorcinol-based compound (C1)]

TACKIROL 620 available from Taoka Chemical Co., Ltd.

### [Melamine-based compound (C2)]

SUMIKANOL 507AP available from Sumitomo Chemical Co., Ltd.

### [Silane coupling agent (C3)]

3-Glycidoxypropyltrimethoxysilane (KBM403 available from Shin-Etsu Chemical Co., Ltd.)

### 〈〈Crosslinking auxiliary (D)〉〉

### [Maleimide compound (D1)]

VULNOC PM available from OUCHI SHINKO CHEMICAL INDUSTRIAL CO., LTD.

### 〈〈Softening agent (E)〉〉

### [Paraffin-based process oil (E1)]

Diana Process Oil PW380 available from Idemitsu Kosan Co., Ltd. (the pour point = -15°C)

### [Poly-α-olefin compound (E2)]

SpectraSyn4 available from Exxon Mobil Corporation (the pour point = -60°C)

### 〈〈Reinforcing agent (F)〉〉

### [Carbon black (GPF class) (F1)]

SHOBLACK IP200 available from Cabot Corporation.

### [Silica (F2)]

CARPLEX 1120 available from Degussa Japan Co., Ltd.

### 〈〈Solvent〉〉

### [Tetrahydrofuran]

### [Toluene]

### [Example 1b]

### (Preparation of solvent-based rubber composition for adhesive layer)

The components shown in Table 2 below each were blended in the proportion shown in the table to prepare a solvent-based rubber composition. That is, first, a rubber component (A2), a softening agent (E) and a reinforcing agent (F), shown in Table 2, were kneaded for 5 minutes at 120°C using a Banbury mixer. After cooling the kneaded product, a crosslinking agent (B), an adhesive component (C) and a crosslinking auxiliary (D) were added thereto, and the mixture was kneaded for 10 minutes at 50°C using an open roll to prepare a rubber composition. Next, this kneaded product was diluted to the prescribed concentration (the solid content: 20% by weight) with a solvent to prepare a solvent-based rubber composition (the viscosity measured by a B-type viscometer: 2800 Pa·s/ordinary temperature).

### (Preparation of vulcanized rubber for sealing)

Similarly to the solvent-based rubber composition, a rubber composition was prepared using the other components excluding the adhesive component (C), the crosslinking auxiliary (D) and the solvent among the components constituting the solvent-based rubber composition for the adhesive layer. That is, using a Banbury mixer, 100 parts of EPDM (JSR EP27 available from JSR Corporation), 10 parts of a paraffin-based process oil (Diana Process Oil PW380 available from Idemitsu Kosan Co., Ltd.), and 45 parts of GPF class carbon black (SHOBLACK IP200 available from Cabot Corporation) were kneaded for 5 minutes at 120°C. After cooling the kneaded product, 5 parts of peroxy ketal [1,1-di(t-butylperoxy)cyclohexane (PERHEXA C-40 available from NOF CORPORATION) was added thereto, and the mixture was kneaded for 10 minutes at 50°C using an open roll to prepare a rubber composition. Then, this rubber composition was crosslinked for 10 minutes at 150°C, after which the composition was cut into a rubber piece to prepare vulcanized rubber for sealing (5 mm in thickness, size of 25 mm × 60 mm).

**[Table 2]**

| (Parts) | | | | | | | | | | |
|---|---|---|---|---|---|---|---|---|---|---|
| | | Example | | | | | | | | Comparative Example |
| | | 1b | 2b | 3b | 4b | 5b | 6b | 7b | 8b | 1b |
| EPDM (Ab1) | | 100 | - | - | - | 100 | 100 | - | 100 | 100 |
| EPDM (Ab2) | | - | 100 | 60 | 60 | - | - | 60 | - | - |
| EPDM (Ab3) | | - | - | 40 | - | - | - | 40 | - | - |
| EPDM (Ab4) | | - | - | - | 40 | - | - | - | - | - |
| Peroxy ketal (B1) | | 5 | 5 | 5 | 5 | 5 | 5 | - | - | 5 |
| Dialkyl peroxide (B2) | | - | - | - | - | - | - | 5 | 5 | - |
| Resorcinol-based compound (C1) | | 2 | 2 | 2 | 2 | 2 | 2 | 2 | 2 | - |
| Melamine-based compound (C2) | | 1.5 | 1.5 | 1.5 | 1.5 | 1.5 | 1.5 | 1.5 | 1.5 | - |
| Silane coupling agent (C3) | | 5 | 5 | 5 | 5 | 5 | 5 | 5 | 5 | - |
| Maleimide compound (D1) | | 0.5 | 1 | 0.5 | 0.5 | - | 0.5 | 0.5 | 0.5 | 0.5 |
| Paraffin-based process oil (E1) | | 10 | 10 | - | 10 | 10 | 10 | - | 10 | 10 |
| Poly-α-olefin compound (E2) | | - | - | 10 | - | - | - | 10 | - | - |
| Carbon black (F1) | | 30 | 45 | 35 | 35 | 45 | 30 | 35 | 30 | 45 |
| Silica (F2) | | - | - | 10 | 10 | - | - | 10 | - | - |
| Tetrahydrofuran (solvent) | | ○ | ○ | ○ | - | ○ | ○ | ○ | ○ | ○ |
| Toluene (solvent) | | - | - | - | ○ | - | - | - | - | - |
| Coating method of solvent-based rubber composition | Spray coating | ○ | ○ | ○ | ○ | ○ | ○ | ○ | ○ | ○ |
| | Dispenser coating | ○ | ○ | ○ | ○ | ○ | ○ | ○ | ○ | ○ |
| Adhesivity to vulcanized rubber (vulcanized rubber/adhesive layer) | | ○ | ○ | ○ | ○ | ○ | - | ○ | - | × |
| Adhesivity to metal (vulcanized rubber/adhesive layer/metal) | | ○ | ○ | ○ | ○ | ○ | - | ○ | - | × |
| Adhesivity to electrolyte membrane (vulcanized rubber/adhesive layer/electrolyte membrane) | | ○ | ○ | ○ | ○ | ○ | - | ○ | - | × |
| Adhesivity to metal (unvulcanized rubber/adhesive layer/metal) | | - | - | - | - | - | ○ | - | ○ | - |
| Adhesivity to electrolyte membrane (unvulcanized rubber/adhesive layer/electrolyte membrane) | | - | - | - | - | - | ○ | - | ○ | - |

The solvent-based rubber composition and the vulcanized rubber obtained in this way were evaluated for various properties according to the following criteria. The results are combinedly shown in the Table 2.

### [Adhesivity to vulcanized rubber (vulcanized rubber/adhesive layer)]

The 90° peeling test was performed in accordance with JIS K6256-2 (2006) and the adhesivity was evaluated. That is, the above-prepared solvent-based rubber composition was applied on one side of the above-prepared vulcanized rubber (5 mm in thickness, size of 25 mm × 60 mm) by a spray method using the W-101-131G type spray gun available from ANEST IWATA Corporation (conditions: injection speed of 100 mm/sec, 3 to 6 times of coating), and this was held for 30 minutes at 150°C to prepare a test specimen (0.1 mm in thickness of the adhesive layer) by allowing them to be crosslinked and bonded together. Next, the test specimen was fitted to a prescribed test jig, subjected to a 90° peeling test, and evaluated for the adhesivity. With regard to the evaluation criteria, one that allows rubber destruction to occur is defined as being ○, and one that allows interfacial peeling to occur is defined as being ×.

### [Adhesivity to metal (vulcanized rubber/adhesive layer/metal)]

The 90° peeling test was performed in accordance with JIS K6256-2 (2006) and the adhesivity was evaluated. That is, the above-prepared solvent-based rubber composition was applied on the surface of a titanium plate (5 mm in thickness, size of 25 mm × 60 mm) by a spray method using the W-101-131G type spray gun available from ANEST IWATA Corporation (conditions: injection speed of 100 mm/sec, 3 to 6 times of coating). Next, the above-prepared vulcanized rubber (5 mm in thickness, size of 25 mm × 60 mm) was arranged on the surface. Then, this was held for 30 minutes at 150°C while being pressed from the vulcanized rubber side to prepare a test specimen (0.1 mm in thickness of the adhesive layer) by allowing them to be crosslinked and bonded together. Next, the test specimen was fitted to a prescribed test jig, subjected to a 90° peeling test, and evaluated for the adhesivity. With regard to the evaluation criteria, one that allows rubber destruction to occur is defined as being ○, and one that allows interfacial peeling to occur is defined as being ○.

### [Adhesivity to electrolyte membrane (vulcanized rubber/adhesive layer/electrolyte membrane)]

A test specimen was evaluated for the adhesivity in the same manner as above except that an electrolyte membrane (0.001 mm in thickness, size of 10 mm × 50 mm) composed of a fluorine-based resin (Nafion available from Du Pont K. K.) was used instead of the titanium plate in the evaluation of the adhesivity to metal. With regard to the evaluation criteria, one that allows rubber destruction to occur is defined as being ○, and one that allows interfacial peeling to occur is defined as being ×.

### [Examples 2b to 5b, 7b, and Comparative Example 1b]

A test specimen was evaluated for the adhesivity to vulcanized rubber, the adhesivity to metal and the adhesivity to electrolyte membrane according to Example 1b except that each of rubber compositions shown in the Table 2 was used as the solvent-based rubber composition for the adhesive layer. The results are combinedly shown in the Table 2. In this connection, the preparation condition (vulcanization condition) of the test specimen prepared from a solvent-based rubber composition in Example 7b was set to 190°C × 30 minutes.

### [Examples 6b, 8b]

A test specimen was evaluated for the adhesivity to metal and the adhesivity to electrolyte membrane according to Example 1b except that an unvulcanized rubber was used instead of the vulcanized rubber for sealing. In this connection, the preparation condition (vulcanization condition) of the test specimen prepared from a solvent-based rubber composition in Example 8b was set to 190°C × 30 minutes.

### (Preparation of unvulcanized rubber)

A rubber composition similar to that used in the preparation of the vulcanized rubber for sealing in Example 1b was prepared. Then, the rubber composition was cut into an unvulcanized rubber piece to prepare unvulcanized rubber for sealing (5 mm in thickness, size of 25 mm × 60 mm).

### [Adhesivity to metal (unvulcanized rubber/adhesive layer/metal)]

The 90° peeling test was performed in accordance with JIS K6256-2 (2006) and the adhesivity was evaluated. That is, the above-prepared solvent-based rubber composition was applied on the surface of a titanium plate (5 mm in thickness, size of 25 mm × 60 mm) by a spray method using the W-101-131G type spray gun available from ANEST IWATA Corporation (conditions: injection speed of 100 mm/sec, 3 to 6 times of coating). Next, the above-prepared unvulcanized rubber (5 mm in thickness, size of 25 mm × 60 mm) was arranged on the surface. Subsequently, this was held for 30 minutes at 150°C while being pressed from the unvulcanized rubber side to prepare a test specimen (0.1 mm in thickness of the adhesive layer) by allowing them to be crosslinked and bonded together. Next, the test specimen was fitted to a prescribed test jig, subj ected to a 90° peeling test, and evaluated for the adhesivity. With regard to the evaluation criteria, one that allows rubber destruction to occur is defined as being ○, and one that allows interfacial peeling to occur is defined as being ×.

### [Adhesivity to electrolyte membrane (unvulcanized rubber/adhesive layer/electrolyte membrane)]

A test specimen was evaluated for the adhesivity in the same manner as above except that an electrolyte membrane (0.001 mm in thickness, size of 10 mm × 50 mm) composed of a fluorine-based resin (Nafion available from Du Pont K. K.) was used instead of the titanium plate in the evaluation of the adhesivity to metal. With regard to the evaluation criteria, one that allows rubber destruction to occur is defined as being ○, and one that allows interfacial peeling to occur is defined as being x.

The results shown in the Table 2 reveal that the products in Examples 1b to 8b are excellent in adhesivity to a rubber member (vulcanized rubber, unvulcanized rubber), a metal or an electrolyte membrane since they allow the adhesive component (C) to be blended in the solvent-based rubber composition for the adhesive layer. Furthermore, the products in Examples 1b to 8b do not foul molds, require low production costs and are excellent in mass productivity since they do not allow the adhesive component (C) to be blended in the rubber member (vulcanized rubber, unvulcanized rubber) for sealing.

In this connection, even in the case where dispenser coating is performed, instead of spray coating, using JETMERTER2 available from Musashi engineering Co., Ltd. (conditions: injection speed of 60 mm/sec, injection pressure of 0.05 to 0.06 MPa) , the evaluation results similar to those in the case of spray coating have been obtained. Moreover, even in the case where EPM, NBR and H-NBR are used instead of the EPDM in the solvent-based rubber composition, the evaluation results similar to those in the case where the above-mentioned EPDM is used have been obtained. Incidentally, it can be said that even among the products in Examples, compared to the products in Examples 7b, 8b [the dialkyl peroxide (B2) is used as a crosslinking agent], the products in Examples 1b to 6b [the peroxy ketal (B1) is used as a crosslinking agent] are preferred because vulcanization at a lower temperature is possible.

In contrast, the product in Comparative Example 1b is poor in adhesivity to a rubber member (vulcanized rubber, unvulcanized rubber), a metal or an electrolyte membrane since it does not allow the adhesive component (C) to be blended in the solvent-based rubber composition for the adhesive layer.

In the above-mentioned examples, specific aspects of the present invention are described, but the above-mentioned examples are merely illustrative and should not be restrictively construed. Various alterations thereof that can be understood by those skilled in the art are contemplated within the present invention.

The liquid rubber composition according to the present invention is used in an adhesive layer disposed to a fuel cell sealed body prepared by allowing a constituting member for a fuel cell such as a metal separator and a rubber member for sealing the member to be bonded together through the adhesive layer or a fuel cell sealed body prepared by allowing the two rubber members to be bonded together through the adhesive layer. Since the adhesive layer is formed from any one of a liquid rubber composition (α) containing the foregoing (A1) to (C) and a solvent-based rubber composition (β) containing a solvent together with the foregoing (A2) to (C), the layer is high in adhesion reliability. As such, it is not necessary to knead an adhesive component (C) into the rubber member. Thus, there is no problem of the mold fouling, and the rubber composition requires low production costs and is excellent in mass productivity.

### DESCRIPTION OF REFERENCE SIGNS

- 1: Cell
- 2: MEA
- 3: Gas diffusion layer
- 4a, 4b: Rubber member
- 5: Separator
- 6: Adhesive layer

## Claims

1. A rubber composition for use in an adhesive layer included in a fuel cell sealed body, the rubber composition being any one of:
(α) a liquid rubber composition containing
(A1) a rubber component containing at least liquid rubber,
(B) a crosslinking agent composed of an organic peroxide, and
(C) at least one adhesive component each selected from the group consisting of resorcinol-based compounds, melamine-based compounds, aluminate-based coupling agents and silane coupling agents, or
(β) a solvent-based rubber composition containing a solvent,
(A2) at least one rubber component each selected from the group consisting of ethylene-propylene rubber, ethylene-propylene-diene rubber, acrylonitrile-butadiene rubber and hydrogenated acrylonitrile-butadiene rubber,
(B) a crosslinking agent composed of an organic peroxide, and
(C) at least one adhesive component each selected from the group consisting of resorcinol-based compounds, melamine-based compounds, aluminate-based coupling agents and silane coupling agents.

2. The rubber composition according to claim 1, wherein (A1) contains, in addition to the liquid rubber, at least one selected from the group consisting of ethylene-propylene rubber, ethylene-propylene-diene rubber, acrylonitrile-butadiene rubber and hydrogenated acrylonitrile-butadiene rubber.

3. The rubber composition according to claim 1 or 2, wherein the amount of the liquid rubber in the entire (A1) is 40% by weight or more.

4. The rubber composition according to any one of claims 1 to 3, wherein the liquid rubber is at least one selected from the group consisting of liquid ethylene-propylene rubber, liquid ethylene-propylene-diene rubber, liquid acrylonitrile-butadiene rubber and liquid hydrogenated acrylonitrile-butadiene rubber.

5. The rubber composition according to any one of claims 1 to 3, wherein the liquid rubber is at least one of liquid ethylene-propylene rubber and liquid ethylene-propylene-diene rubber and has an ethylene content of at most 60% by weight or less.

6. The rubber composition according to claim 1, wherein the rubber component of (A2) is ethylene-propylene rubber or ethylene-propylene-diene rubber and has an ethylene content of 60% by weight or less.

7. The rubber composition according to claim 1 or 6, wherein the solvent is at least one selected from the group consisting of tetrahydrofuran, toluene, methylcyclohexane and n-heptane.

8. The rubber composition according to any one of claims 1 to 7, wherein the organic peroxide has a 1-hour half-life temperature of 160°C or lower.

9. The rubber composition according to any one of claims 1 to 8, further comprising:
(D) a crosslinking auxiliary.

10. A fuel cell sealed body prepared by allowing a constituting member for a fuel cell and a rubber member for sealing to be bonded together through an adhesive layer or prepared by allowing the two rubber members to be bonded together through an adhesive layer, the adhesive layer being composed of a rubber composition according to any one of claims 1 to 9.

11. The fuel cell sealed body according to claim 10, wherein the constituting member for a fuel cell is at least one selected from the group consisting of a metal separator, a membrane electrode assembly and a gas diffusion layer.

12. The fuel cell sealed body according to claim 10 or 11, wherein the rubber member for sealing is vulcanized rubber.

13. The fuel cell sealed body according to any one of claims 10 to 12, wherein the rubber member for sealing contains at least one of ethylene-propylene rubber having an ethylene content of 60% by weight or less and ethylene-propylene-diene rubber having an ethylene content of 60% by weight or less.
